# EUROPEAN PATENT SPECIFICATION

(11) **EP 2 694 246 B1**
(45) Date of publication and mention of the grant of the patent: **04.03.2015**
(21) Application number: 12720441.0
(22) Date of filing: 04.04.2012
(51) Int. Cl.: B23Q 11/00

(54) **DUST COLLECTING DEVICE**
STAUBSAMMELVORRICHTUNG
DISPOSITIF DE COLLECTE DE POUSSIÈRE

(30) Priority: 04.04.2011 GB 201105677
(43) Date of publication of application: 12.02.2014
(73) Proprietor: Hicks, Timothy John, Horsham, Sussex RH13 6SQ (GB)
(72) Inventor: Hicks, Timothy John, Horsham, Sussex RH13 6SQ (GB)
(74) Representative: Schlich, George
(86) International application number: PCT/EP2012/056216
(87) International publication number: WO 2012/136725

(56) References cited:
- DE-A1- 10 301 414
- DE-U1- 20 300 482
- DE-U1- 20 310 110
- GB-A- 2 364 375
- GB-A- 2 365 411
- GB-A- 2 443 398

## Description

This invention relates to a collector for dust that is created by drilling, chiselling, or otherwise using a tool on a work surface e.g. a wall. The collector can be removably attached to the work surface to enable subsequent disposal of the dust.

A dust collector is known from WO 03/018219. It is made from a blank with two coextensive portions folded into a V-shape, with its side edges glued together to make a pre-formed envelope. An outer surface portion of the envelope has adhesive applied thereto for attaching it to a work surface. The blank has a complex shape, because it has a fold line and a free edge, designed to hold the envelope slightly open to receive falling dust. This envelope has only a very narrow opening and narrow side walls. It also has U-shape openings above the upper edges of the envelope, which assist with drill alignment. However, dust will be spattered sideways when the drill is used and this dust will not fall into the collector. It also difficult to ensure correct positioning of the envelope with respect to the hole to be drilled.

A dust collector is also known from GB 2274706. This describes a pre-formed V-shaped envelope or pouch, which is generally similar to that of WO 03/01829 and which suffers from the same problems. It defines a narrow opening and the narrow side edges of the envelope are almost level with the drill, so it will not collect dust that spatters from the drill bit. It also requires careful alignment to ensure that a hole is drilled in the correct place.

DE-29601940 U discloses a dust collecting pouch which is generally similar to the prior art mentioned above. Fig. 2 of this reference shows dust falling into the narrow opening of the pouch. However, dust will be spattered sideways in use, because the upper edges of the pouch are well below the axis of rotation of the drill bit. This dust will not fall into the collector.

DE-A-103 01 414 (fig. 4) discloses a dust collector comprising walls defining a receptacle for receiving dust, the receptacle having adhesive means for removable attachment to a work surface, wherein the dust collector comprises two walls that define a generally V-shaped receptacle; said walls comprising respectively an opening to confront the work surface and an opening opposite thereto to provide access to a tool; said walls being located to act as baffles to intercept dust spattered by the tool, when the receptacle is attached to the work surface, and in that the walls define generally rectangular panels, the extent of their projection being sufficient to act as baffles for deflecting the spatter from a tool.

The present invention seeks to provide an alternative dust collector, preferably avoiding the above-mentioned problem of dust spatter. At least in its preferred embodiments, the dust collector is easier to use (e.g. regarding drill alignment), it has a wider opening to receive falling dust, it is less expensive to manufacture and use, and it is disposable.

A dust collector according to the invention comprises walls defining a receptacle for receiving dust, the receptacle having adhesive means for removable attachment to a work surface, characterised in that the walls define a receptacle, (a) with an opening to confront the work surface, and (b) with an opening opposite thereto to provide access to a tool; said walls spacing said openings apart and being located to act as baffles to intercept dust spattered sideways by the tool when the receptacle is attached to the work surface.

The dust collector of the invention may have any number of walls provided the walls are located to act as baffles to intercept dust spattered sideways by the tool when the receptacle is attached to the work surface. Accordingly, the dust collector of the invention comprises 2 walls.

The walls may be arranged in use to form a shape appropriate for the size and shape of the surface to be worked. The dust collector of the invention comprises 2 walls, arranged to be generally V-shaped.

Advantageously, the panels have flanges for adhesively abutting the work surface. Further flanges can also be provided around the tool access opening to assist with dust retention. The inner surfaces of these panels can have an adhesive coating to assist in retaining dust.

Preferably, the walls are formed by a blank with fold lines that enable the side panels to be folded upwardly from the floor panel. These fold lines can be weakened areas of the blank. An advantage of using a blank, for example, made of paper, cardboard, foil or some other conformable material, is that a plurality of blanks can be produced as a stack or reel, thereby enabling them to detach separately for use.

According to a preferred embodiment of the invention, the walls are produced as a weakened area-separated series on a reel, thereby enabling the user to select how many walls to include in the dust collector in order to form a dust collector of the desired size and shape.

A reel according to the invention comprises a plurality of adjacent walls, wherein a block of 2 walls can be detached to form a dust collector according to the invention. Typically, the reel comprises 10 or more, preferably 20 or more, more preferably 30 or more, yet more preferably 50 or more walls. This configuration advantageously protects the adhesive against dust before use.

A stack of the invention may be bound along one edge to form a book in which each page comprises one or more blanks. Alternatively, the stack may be formed as a continuous tape of walls folded, for example, in the manner of a concertina, wherein a block of 2 or more walls can be detached to form a dust collector according to the invention. Typically, the stack comprises 10 or more, preferably 20 or more, more preferably 30 or more, yet more preferably 50 or more walls. This configuration also protects the adhesive against dust before use.

A suitable blank has side panels and a floor panel. These panels have flanges which are folded along lines to produce a generally V-shaped receptacle, open at the rear, and at the front. Adhesive is suitably applied to the underside of at least part or and preferably substantially all of the flanges so as to enable the rear of the receptacle to be removably attached to a workpiece or work surface, such as a wall. The collector can be located to surround one or two or more holes and in position so that the side panels extend both above and below the position of the hole so as to act as baffles to deflect dust spattered sideways when the drill is used. The area of the rear opening is also preferably relatively large, as is the area of the front opening, whereby the drill can be easily positioned to make the hole, and there is no need for careful alignment (as in the prior art).

The flanges can be separated by cuts and / or triangular cut outs to assist folding of the blank. The fold lines can be scored or weakened to facilitate folding.

The blank can be made of any suitable conformable material, such as paper, cardboard, foil, etc. The rectangular shape of the panels facilitates folding of the panels prior to use.

A preferred method of use includes the steps of folding the flanges to face inwardly, folding the side panels to extend upwardly from the floor panel, and adhering the receptacle to the work surface, so that the side panels extend above the point of impact of a tool, whereby the side panels act as baffles to deflect any side spatter into the receptacle. Alternatively, the V shaped receptacles can be preformed ready for use, either in the course of manufacture, or in a machine on site. The blank can be one of a multiplicity of similar blanks, produced either in a stack (not illustrated), or in a roll. This has the advantage that they can be detached for use on site.

The invention is now illustrated with reference to the accompanying drawings, in which:
Fig. 1 shows a background example;
Fig. 2 shows a perspective view of the background example; when folded, as it would appear in use affixed to a work surface;
Fig. 3 shows an embodiment of the invention;
Fig. 4 shows a perspective view of the embodiment of the invention as it would appear when folded and in use affixed to a work surface; and
Fig. 5 shows a second embodiment of the invention.

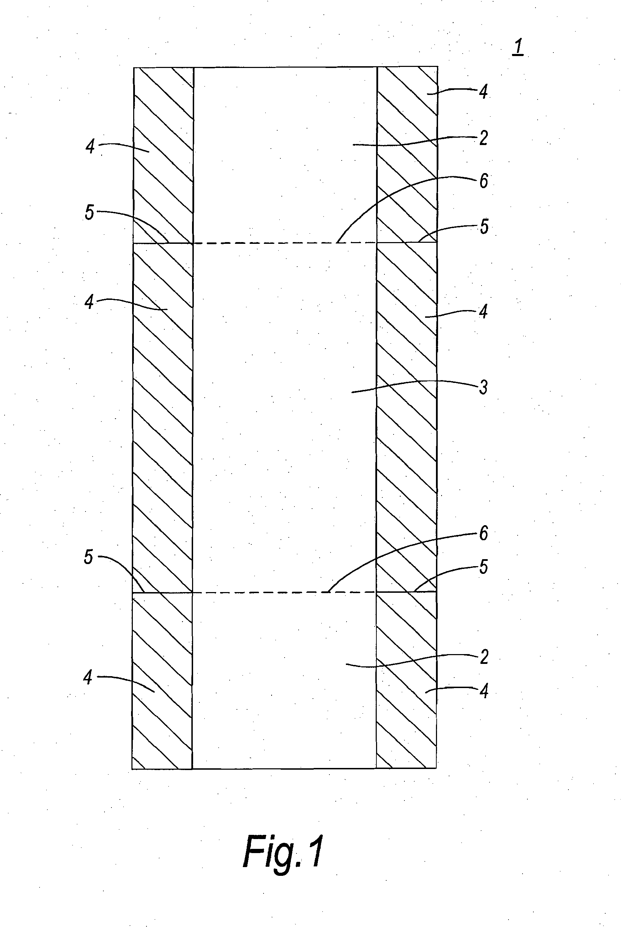

Referring to the drawings, and in particular to Fig. 1, a blank **1** comprises two panels that become side panels **2** in use and one panel that becomes a floor panel **3** in use. The blank is pre-creased at the positions indicated by the dashed lines **6** to facilitate folding, where the side panels meet the floor panel. In the illustrated embodiment, the blank has adhesive along both sides of its full length on the facing surface (shown as diagonal hatching). These adhesive sections are divided by cuts **5**, which are made in-line with the creases as indicated **5**. Thus three flaps or flanges **4** per side of the blank are formed, defined by the edges of the blank, the cuts **5** and the border between adhesive sections and panels **2,3.**

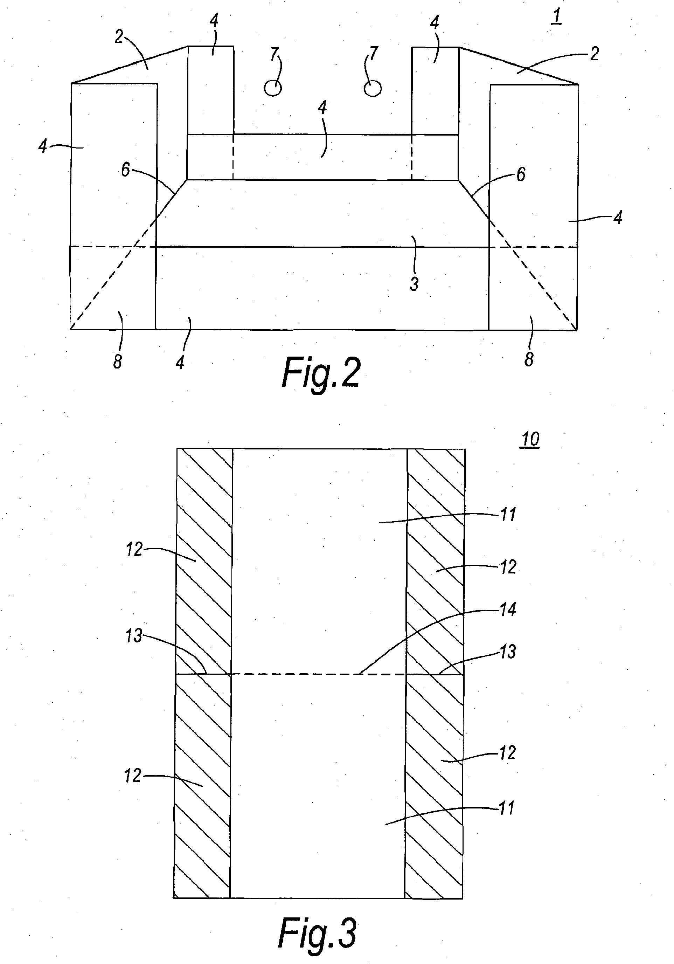

A blank according to Fig. 1 may be folded to form the dust collector shown in use in Fig. 2. With reference to Fig. 2, the dust collector **1** may be formed by first folding the blank along the pre-creased lines **6,** to form approximately right angled folds, to define two edges between the side panels **2** and the floor panel **3**. The adhesive on the flaps **4** (hatching not shown to enhance clarity) should be directed outwith the device. The flaps **4** are then folded in to form approximate right angled folds with respect to the panels, and the flaps attached to the floor panel and those attached to the side panels are pushed together where they meet (see Fig. 2), and the confronting flaps are affixed to each other using the adhesive, which for the outfacing flaps / flanges need only be provided in the overlap areas **8.** Alternatively, the outfacing flaps / flanges can be mechanically attached, e.g. by interacting slots and tabs.

Thus, the flaps form two opposing flanges **4,** which provide mechanical strength for the three-dimensional structure of the dust collector **1**. The dust collector **1** is then affixed to the work surface using the now outwardly-facing adhesive of the flange that is oriented to confront the work surface. The dust collector **1** is placed so that the hole or holes to be drilled **7** are located within the opening framed by the flange that confronts the work surface, ensuring that the side panels **2** extend above the hole or holes to be drilled **7,** thus being in the correct position to catch dust spattered sideways e.g. during drilling.

Referring to Fig. 3, a blank of an embodiment of the invention **10** comprises two panels that become side panels **11.** The blank is pre-creased at the position indicated by the dashed line **14** to facilitate folding, where the side panels meet each other. In the illustrated embodiment, the blank has adhesive along both sides of its full length on the facing surface (shown as diagonal hatching). These adhesive sections are divided by cuts **13,** which are made in-line with the creases as indicated **13.** Thus two flaps **12** per side of the blank are formed, defined by the edges of the blank, the cuts **13** and the border between adhesive sections and panels **11.**

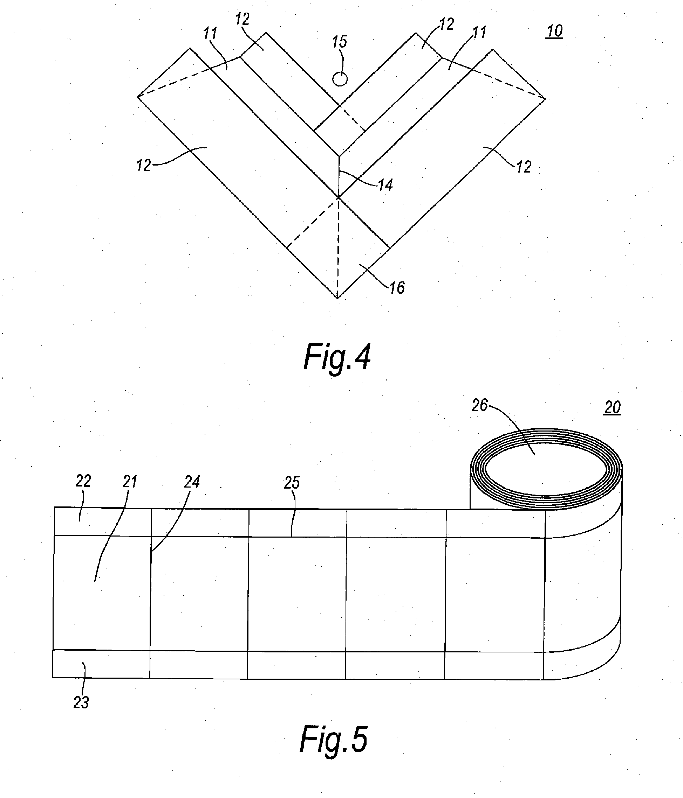

A blank according to Fig. 3 may be folded to form the dust collector shown in use in Fig. 4. With reference to Fig. 4, the dust collector **10** may be formed by first folding the blank along the pre-creased line **14,** to define an edge between the two side panels **11.** The adhesive on the flaps **12** (hatching not shown to enhance clarity) should be directed outwith the device. The flaps **12** are then folded in to form approximately right angled folds with respect to the panels, and the flaps from each side panel are pushed together where they meet (shown in Fig. 4), and the confronting flaps are affixed to each other using the adhesive. Again, the outfacing flap surfaces **16** need adhesive only in the overlap area, or can be mechanically attached, e.g. by interacting slots and tabs. Thus, the flaps form a two opposing flanges **12,** which provide mechanical strength for the three-dimensional structure of the dust collector **10.** The dust collector **10** is then affixed to the work surface using the now outwardly-facing adhesive of the flange that is oriented to confront the work surface. The dust collector **10** is placed so that the hole or holes to be drilled **15** are located within the opening framed by the flange that confronts the work surface, ensuring that the side panels **11** extend above the hole or holes to be drilled **15,** again suitable to catch dust spattered sideways.

Referring to Fig. 5, a reel of blanks of another embodiment of the invention **20** comprises a number of panels **21.** The panels are perforated across the full width of the reel at the position indicated **24** to facilitate accurate tearing or folding, as appropriate, where the panels meet each other. In the illustrated embodiment, the blank has adhesive along both sides of its full length on the facing surface **22,23.** One side **22** has low-tack adhesive to facilitate removal from the work surface after use, whereas the other side **23** has higher tack adhesive to ensure the structural integrity of the dust collector. Thus two flaps **22,23** per side of the panel are formed, defined by the edges of the reel, the perforations **24** and the border between adhesive sections and panels **25.**

In use, a blank is formed from the reel by tearing off a strip of panels with the number of panels in the strip being determined by the size and shape of the surface to be worked. The dust collector is formed from the blank by first folding the blank along the perforated lines **24** as required to define the overall desired collector shape, thus defining edges between the panels **21.** The adhesive on the flaps **22** is directed outwith the device. The flaps **22** are then folded in to form approximately right angled folds with respect to the panels, and the flaps from each side panel are pushed together where they meet one at a time to fix the collector in the desired shape, and the confronting flaps are affixed to each other using the adhesive. Thus, the flaps form two opposing flanges **22,23,** which provide mechanical strength for the three-dimensional structure of the dust collector **20.** The dust collector **20** is then affixed to the work surface using the now outwardly-facing low-tack adhesive of the flange that is oriented to confront the work surface **22.** The dust collector **20** is placed so that the work surface to be worked is located within the opening framed by the flange that confronts the work surface, ensuring that the topmost panels **21** extend above the hole or holes to be drilled, in a manner suitable to catch dust spattered sideways.

Accordingly the invention provides a dust collector.

## Claims

1. A dust collector (10), comprising walls defining a receptacle for receiving dust, the receptacle having adhesive means for removable attachment to a work surface, wherein the dust collector comprises 2 walls that define a generally V-shaped receptacle **characterised in that** it comprises an opening to confront the work surface, and an opening opposite thereto to provide access to a tool; said walls spacing said openings apart and being located to act as baffles to intercept dust spattered sideways by the tool, when the receptacle is attached to the work surface, and **in that** the walls project away from the opening that confronts the worksurface, so as to define generally rectangular panels (11), the extent of their projection being sufficient to act as baffles for deflecting the spatter from a tool, and **in that** the walls have flanges (12) for adhesively abutting the work surface.

2. A dust collector (10) according to claim 1, in which the receptacle is open over a coextensive area to facilitate tool positioning

3. A dust collector (10) according to any preceding claim, in which further flanges (12) are provided around the tool access opening to assist with dust retention.

4. A dust collector (10) according to any preceding claim, in which inner surfaces of the walls or panels (11) have an adhesive coating to assist in retaining dust.

5. A dust collector (10) according to any preceding claim, in which the walls are defined by a blank made of conformable material and is one of a plurality of blanks produced as a stack or reel, thereby enabling them to detach separately for use.

6. A dust collector (10) according to claims 1 to 4, wherein the walls are produced as a weakened area-separated series on a reel, thereby enabling the user to select how many walls to include in the dust collector (10).

7. A reel comprising a plurality of adjacent walls, wherein a block of 2 walls can be detached to form a dust collector (10, 20) according to any of claims 1 to 6.

8. A reel according to claim 7, comprising 30 or more walls.

9. A reel according to claim 7, comprising 50 or more walls.

## Patentansprüche

1. Ein Staubsammler (10), umfassend Wände, die einen Behälter zum Aufnehmen von Staub definieren, den Behälter mit einem Klebemittel für eine abnehmbare Befestigung auf einer Arbeitsfläche, wobei der Staubsammler 2 Wände umfasst, die einen allgemein V-förmigen Behälter definieren, wobei er eine Öffnung zum Treffen auf die Arbeitsfläche und eine dieser Stelle gegenüberliegende Öffnung zum Bereitstellen eines Zugangs für ein Werkzeug umfasst; besagte Wände Raum zwischen diesen Öffnungen schaffen und positioniert sind, um als Umlenkbleche zum Auffangen von durch das Werkzeug seitlich verteilten Staub zu fungieren, wenn der Behälter an der Arbeitsoberfläche befestigt wird, und wobei die Wände von der an die Arbeitsfläche anschließenden Öffnung wegstehen, um allgemein rechteckige Paneele (11) zu definieren, wobei das Ausmaß ihrer Projektion ausreichend ist, um als Umlenkbleche zum Umleiten der Spritzer des Werkzeugs zu fungieren und wobei die Wände Flansche für eine adhäsive Stoßfläche zur die Arbeitsfläche aufweisen.

2. Ein Staubstammler (10) nach Anspruch 1, in dem ein Behälter offen über einem flächengleichen Bereich für eine vereinfachte Werkzeugpositionierung ist.

3. Ein Staubstammler (10) nach jedem der vorstehenden Ansprüche, in dem weitere Flansche (12) um die Werkzeugzugangsöffnung herum zum Unterstützen der Staubrückhaltung vorgesehen sind.

4. Ein Staubstammler (10) nach jedem der vorstehenden Ansprüche, in dem die Innenoberflächen der Wände oder Paneele (11) eine Klebstoffbeschichtung zum Unterstützen der Staubrückhaltung aufweisen.

5. Ein Staubstammler (10) nach jedem der vorstehenden Ansprüche, in dem die Wände durch einen Rohling aus nachgiebigem Material definiert sind, bei dem es sich um einen aus einer Vielzahl von als Stapel oder Spule produzierten Rohlingen handelt, wodurch sie sich einzeln zur Verwendung loslösen können.

6. Ein Staubstammler (10) nach Ansprüchen 1 bis 4, wobei die Wände als eine geschwächte, räumlich getrennte Serie auf einer Spule produziert werden, wodurch es dem Nutzer möglich ist, zu wählen, wie viele Wände der Staubsammler (10) enthalten soll.

7. Eine Spule umfassend eine Vielzahl angrenzender Wände, wobei ein Block von 2 Wänden abgenommen werden kann, um einen Staubsammler (10, 20) nach einem der Ansprüche 1 bis 6 zu bilden.

8. Eine Spule nach Anspruch 7, umfassend 30 oder mehr Wände.

9. Eine Spule nach Anspruch 7, umfassend 50 oder mehr Wände.

## Revendications

1. Un collecteur de poussières (10) comprenant des parois définissant un récipient de réception des poussières, le récipient comprenant un dispositif adhésif permettant la fixation amovible sur une surface de travail, au sein du collecteur de poussières se trouvant 2 parois définissant un récipient à forme générale en V, **caractérisé par le fait qu'**il comprend une ouverture se plaçant de face à la surface de travail, et une ouverture placée en face de celle-ci, afin de permettre l'accès à un outil ; lesdites parois créant un espacement entre lesdites ouvertures, et étant positionnées afin de faire oeuvre d'écran pour intercepter des poussières projetées latéralement par l'outil, lorsque le récipient est fixé sur la surface de travail, et de sorte que les parois projettent hors de l'ouverture en face de la surface de travail, afin de définir des panneaux (11) en forme générale de rectangle, l'étendue de leur projection étant suffisante pour servir d'écran afin de dévier les projections par un outil, et de sorte que les parois soient munies de brides (12) pour faire butée de façon adhésive sur la surface de travail.

2. Un collecteur de poussières (10) selon la revendication 1, dans lequel le récipient est ouvert au-dessus d'une zone coextensive pour faciliter le positionnement de l'outil.

3. Un collecteur de poussières (10) selon une quelconque des revendications précédentes, dans lequel d'autres brides (12) sont placées autour de l'ouverture d'accès à l'outil, afin de faciliter la rétention des poussières.

4. Un collecteur de poussières (10) selon une quelconque des revendications précédentes, dans lequel des surfaces internes des parois ou des panneaux (11) sont recouvertes d'un revêtement adhésif facilitant la rétention des poussières.

5. Un collecteur de poussières (10) selon une quelconque des revendications précédentes, dans lequel les parois sont définies par une découpe réalisée avec un matériau conformable, et faisant partie d'une série de découpes produites en piles ou en rouleaux, afin de pouvoir les détacher séparément lors d'une application.

6. Un collecteur de poussières (10) selon les revendications 1 à 4, dans lequel les parois sont produites sous forme de séries à séparation par zone affaiblie sur un rouleau, en permettant ainsi à l'utilisateur de sélectionner le nombre de parois dont sera muni le collecteur de poussières (10).

7. Un rouleau comprenant une série de parois adjacentes, dans lequel un bloc de 2 parois peut être détaché en formant un collecteur de poussières (10, 20) conforme aux revendications 1 à 6.

8. Un rouleau selon la revendication 7, comprenant 30 parois ou davantage.

9. Un rouleau selon la revendication 7, comprenant 50 parois ou davantage.
